Europäisches Patentamt

(19) European Patent Office

Office européen des brevets

(11) Publication number: **0 014 990**
A1

(12)  **EUROPEAN PATENT APPLICATION**

(21) Application number: 80100823.6

(22) Date of filing: 19.02.80

(51) Int. Cl.³: **B 60 B 3/08**
**B 60 B 7/00, B 60 B 5/02**

(30) Priority: 20.02.79 NZ 189707

(43) Date of publication of application:
03.09.80 Bulletin 80.18

(84) Designated Contracting States:
DE FR GB IT NL SE

(71) Applicant: Whiteford, Norton Bede
State Highway 16
Brighams Creek Whenuapai(NZ)

(72) Inventor: Whiteford, Norton Bede
State Highway 16
Brighams Creek Whenuapai(NZ)

(74) Representative: Brown, John David
FORRESTER & BOEHMERT Widenmayerstrasse 5 IV
D-8000 München 22(DE)

(54) **Improvements in or relating to wheels and methods of forming the same.**

(57)  A wheel for trotting sulkies having a central wheel portion (10) comprising a rim (11) and a hub portion (12) centrally supported within the rim; and two discs (13a, 13b) secured to either side of the central wheel portion.

The discs (13a,13b) are engaged between a substantially radially inwardly aligned surface (36) on the rim and a substantially radially outwardly aligned surface (37) on the hub portion so that the discs contribute to the radial strength of the wheel.

Fig.2.

Improvements in or relating to Wheels

The invention relates to a wheel and in particular to a wheel for a trotting sulky in which a central wheel portion is provided with a pair of substantially continuous discs on either side thereof.

Heretofore wheels for trotting sulkies have commonly comprised a pressed metal rim attached to a hub by means of wire spokes. Light plastic discs have in the past been attached over the greater area of the spokes to prevent horses hooves interfering with the spokes.

The wheels used heretofore have, even when formed from lightweight materials, been relatively heavy and are expensive owing to the relatively high cost of assembly. Further, the discs attached to the wheels merely add to the weight of the wheel without contributing at all to the strength of the wheel.

The invention as claimed is intended to provide a remedy. It solves the problem of the prior art wheels by providing a central wheel portion moulded from lightweight material and having discs attached to either side thereof in such a manner as to absorb at least some of the radial stresses applied to the wheel rim.

Accordingly, in one aspect, the invention consists in a wheel comprising a central wheel portion including a rim to receive a tyre, and a hub centrally and axially supported within said rim; and a pair of substantially continuous circular discs fitted to either side of said central wheel portion the outer peripheries of said discs engaging the external surface of said rim on opposite sides of the axial centreline of said rim, the centres of said discs engaging about opposite ends of said hub.

In a further aspect the invention consists in a method of forming a wheel, said method including the steps of forming a central wheel portion comprising a rim and a hub axially supported centrally within said rim; forming two substantially continuous discs; engaging the outer peripheries of each of said discs with the external surface of said rim on opposite sides of the axial centreline of said rim and engaging the central portion of each of said discs about opposite outer ends of said hub portion.

Preferred forms of the wheel in accordance with the invention and a preferred method of forming the same will now be described with reference to the accompanying drawings in which:

Fig. 1 shows a side elevational view of a wheel formed in accordance with the invention having one of the disc members removed therefrom;

Fig. 2 shows a view along the line II-II in Fig. 1;

Fig. 3 shows a similar view to Fig. 1 with the disc in place on the wheel;

Fig. 4 shows a view along the line IV-IV in Fig. 1, - and

Fig. 5 shows an enlarged cross-sectional view of the central hub portion of a wheel formed in accordance with the invention with additional components in place for fitting to a dead axle.

According to one aspect of the invention a wheel is provided comprising a central wheel portion 10 having a rim 11, a hub 12 centrally and axially supported within the rim 11. The wheel is completed by the provision of a pair of substantially continuous circular discs 13a and 13b fitted to either side of the central wheel portion 6, the outer peripheries of the discs engaging with the external surface 14 of the rim portion while the centre of the discs engage about ends 15a and 15b of the hub portion 12. It will be seen that the discs 13a and 13b engage with the outer surface 14 of the rim on opposite sides of the axial centreline of the rim and thus since they are engaged with both the rim and the hub, may assist in absorbing radial loading imposed on the wheel.

The hub 12 is, as shown, supported within the rim 11 by six spokes 16, the rim, hub and spokes preferably being injection moulded integrally from plastics material.

In the embodiment herein described the rim 11 is configured and arranged to receive and support a standard tubed rubber tyre. As the wheel has been developed for the particular application to trotting sulkies, the rim has been configured and arranged to support a 27 x 1.25 rubber bicycle tyre (not shown) although it will be appreciated that different applications may require the use of a different sized tyre. A boss 17 is formed substantially in the axial centre line of the rim adjacent one of the spokes 16, the boss 17 including a through bore (not shown) through which the valve of the tyre tube may be passed to allow inflation and deflation of the tyre when in place.

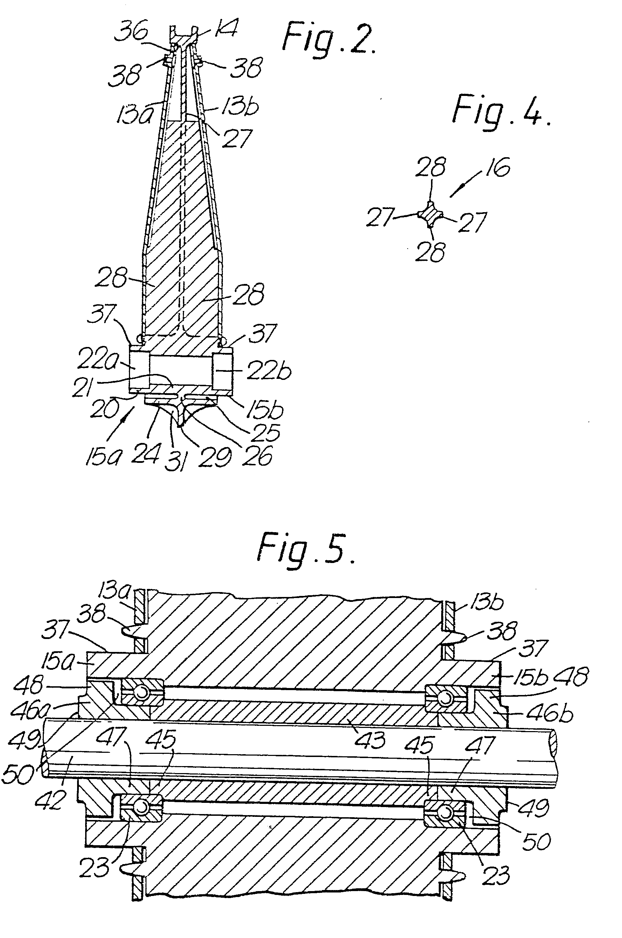

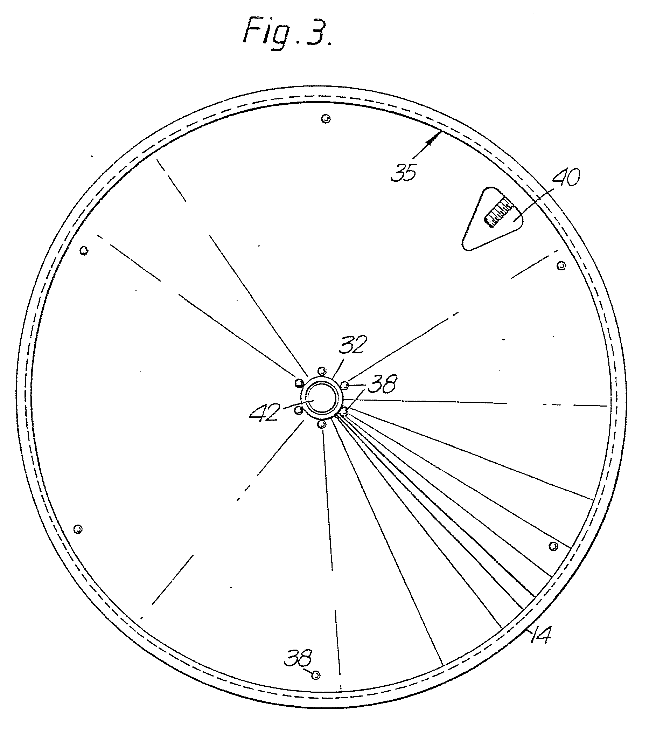

The hub 12 comprises an inner sleeve portion 20 having an inner stepped portion 21 defined therein substantially about the axial centreline of the wheel; the stepped portion 21 defining two bearing cavities 22a and 22b which locate two roller bearings 23 (Fig. 5) in spaced axial alignment.

The hub inner sleeve 20 is located within an outer sleeve portion 24 by a plurality of circumferentially spaced webs 25 which extend across the axis of the hub, and a central radially extending web 26. The reason why the hub is comprised of the inner and outer sleeve portions 20 and 24 and the webs 25 and 26 is to standardise the wall thickness of the components within the central wheel portion and thus provide good moulding characteristics during the formation thereof.

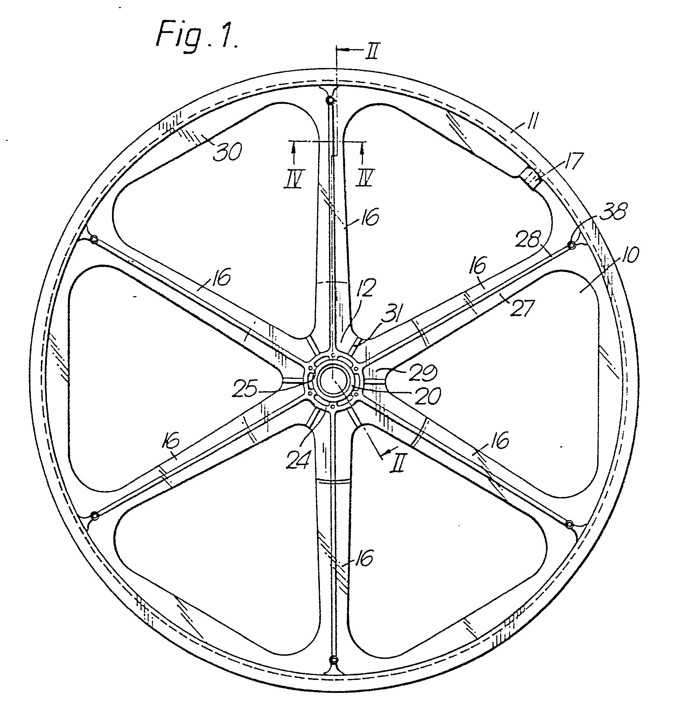

The hub 12 is supported within the rim 11 by six spokes 16, the cross section of each of which comprises four mutually orthogonal webs as shown in Fig. 4. As can be seen from Fig. 1, the webs 27 lying in the plane of

the wheel, taper uniformly from the hub 12 to the rim 11 however the webs 28 projecting perpendicular to the plane of the wheel extend in a substantially parallel manner to about one third of the radius of the wheel before tapering towards the rim portion 11 as shown in Fig. 2. I have provided this form of spoke to minimise racking of the wheel when subjected to axial and combined axial and radial loadings.

It can be seen from the Figures that the spokes are equi-spaced about the circumference of the wheel and the inner ends of adjacent webs 27 merge into each other through fillets 29. In a like manner the outer ends of the webs 27 are interconnected by further fillets 30 which span across the underside of the rim 11 substantially on the axial centre line thereof. Still further, fillets 31 are provided between the circumferential centre line of each of the fillets 29 and the outer surface of the outer sleeve 24 the fillets 31 being arranged in a plane perpendicular to the plane of fillets 29.

It will be appreciated from Fig. 2 that the ends of the hub lie axially beyond the axially outer edges of the rim so that the wheel may be held between forks (not shown) without the rim or a tyre held on the rim fouling the fork members.

As also shown in Fig. 2 each of the discs 13a and 13b is a concave/convex member having a central aperture 32 therein, the discs being permanently and securely fixed to the central wheel portion so as to enhance the radial strength thereof. Accordingly the outer peripheries 35 of the discs are preferably engaged under the radially inwardly aligned undersurface 36 of the rim while the inner periphery of each of the discs defined by aperture 32 is engaged with a radially outwardly aligned lip 37 provided on each end of the hub 12. The discs 13a and 13b are held in this position by means of heat rivets formed by locating the discs over heat meltable studs 38 formed on radially outer and inner parts of each of the spokes and then applying heat to the studs to form a rivet over the apertures provided in the discs to retain the discs in position. It will be appreciated that the discs are provided with suitable apertures corresponding to the positions of the studs 38 to allow the discs to be located thereon.

As can be seen from Fig. 3 each of the discs is provided with an aperture 40 therein to allow access to the tyre valve so the same may be connected to a suitable air supply to allow inflation of the tyre. The apertures 40 may be bounded by inwardly defined skirts (not shown) so that when the discs 13a and 13b are in position on the central wheel portion the two skirts axially mate, retaining the tyre valve therebetween but otherwise sealing off the interior of the central wheel portion to avoid the ingress of unwanted matter.

With reference now to Fig. 5, to enable the wheel to be mounted on a dead axle shaft 42 a pair of bearings 23 are fitted into opposite ends of the hub 12 as described above. While the hub portion is preferably moulded to receive the bearings directly, moulding difficulties may necessitate the insertion of a suitably cast or machined metal insert (not shown) to hold the bearings 23 in spaced axial alignment.

In the assembled state, in order to enhance the axial alignment and spacing of the bearings 23 a cylindrical tubular spacer 43 is provided which is located within the hub cavity 44 concentrically therewith. The spacer 43 may rotate with the bearings 23 and includes spigot portions 45 at either end thereof, the spigot portions 45 internally engaging each of the bearings 23. End caps 46a and 46b are provided each of which include a further spigot portion 47 also internally engaging the opposite ends of bearings 23 to abut in end engagement with the spigot portions 45. The end caps 46a, 46b also include an extended diameter portion 48, the outer periphery of which is a close rotating fit within the ends of the hub so as to prevent objects of any substantial size intefering with the bearings 23. Further the axially outer ends 49 of each end cap provide an outwardly facing spigot to space the edges of the hub from the forks supporting the wheel. Owing to the configuration of the components a gap 50 remains in the assembled state, between the bearing 23 and the extended portion 48 of each end cap and this gap may be used to receive an oil seal or such like (not shown).

In order to assemble the hub as above described, one bearing 23 is placed in position in the hub. The spacer 43 is then inserted in position and the remaining bearing 23 pressed into position and engaged with the spacer 43, the end caps 46a, 46b thereafter being placed in position and the combined wheel and hub assembly placed between the wheel forks. A dead axle 42 may then be passed through the forks and through the hub means to retain the wheel in position.

The central wheel portion comprising rim, hub and spokes is, as described, formed as one integral piece, being injection moulded in plastics material. I have found that a glass reinforced plastics material is particularly suitable an example of which is "Zytel" a product of the Du Pont Company, U.S.A.

Also, as described above, the continuous discs are preferably injection moulded and I have found that polycarbonate or "Delrin" a further product of the Du Pont Company are suitable materials for this application.

It is preferred that the discs be formed from a material having some elasticity such that the outer peripheries may be engaged with the rim of the central wheel portion and the centre portions of each disc then axially displaced against this inherent elasticity to engage with the ends of the hub. This ensures that the disc is firmly wedged into the wheel rim and accordingly will absorb a portion of the radial loading placed on it.

Claims:

1. A wheel comprising a central wheel portion (10) having a rim (11) to receive a tyre and a hub (12) centrally and axially supported within said rim; and a pair of substantially continuous circular discs (13a,13b) fitted to either side of said central wheel portion, the outer peripheries (35) of said discs engaging the external surface of said rim on opposite sides of the axial centreline of said rim, the centres (32) of said discs engaging about opposite ends of said hub.

2. A wheel as claimed in Claim 1 wherein said hub (12) is supported within said rim (11) by spokes (16) extending therebetween.

3. A wheel as claimed in Claim 2 wherein said rim (11), spokes (16) and hub (12) comprise one integral piece.

4. A wheel as claimed in any one of the preceding claims wherein the axial length of said hub (12) is greater than the axial width of said rim (11).

5. A wheel as claimed in any one of the preceding claims wherein said discs (13a,13b) comprise convex/concave members having central apertures (32) therethrough.

6. A wheel as claimed in Claim 5 wherein the outer peripheries (35) of said discs (13a,13b) contact radially inwardly aligned surfaces (36) on the exterior of said rim (11).

7. A wheel as claimed in Claim 5 or Claim 6 wherein the inner periphery (32) of said discs (13a,13b) contact radially outwardly aligned surfaces (37) of said hub (12).

8. A wheel as claimed in any one of the preceding claims wherein said central wheel portion (10) includes means (38) to attach said discs thereto.

9. A wheel as claimed in Claim 8 wherein said means comprises heat meltable projections (38) projecting substantially axially from either side of said central wheel portion (10)and wherein said discs include correspondingly located apertures such that in use said projections (38) may be passed through said apertures and heat applied thereto to form a rivet.

10. A wheel substantially as hereinbefore described with reference to the accompanying drawings.

11. A method of forming a wheel, said method including the steps of forming a central wheel portion (10) having a rim (11) and a hub (12) axially supported centrally within said rim (11);forming two substantially continuous discs (13a,13b); with said central wheel portion (10) so that the peripheries (35) of each of said discs (13a, 13b) engage with the external surface of said rim (11) on opposite sides of the axial centreline of said rim (11) the central portion of each of said discs (13a,13b) being engaged about opposite outer ends of said hub portion (12).

12. A method as claimed in claim 11 wherein said central wherel portion (10) and discs (13a,13b) are formed by injection moulding.

13. A method of forming a wheel substantially as hereinbefore described with reference to the accompanying drawings.

0014990

Fig.1.

## Fig. 2.

## Fig. 4.

## Fig. 5.

Fig.3.

| DOCUMENTS CONSIDERED TO BE RELEVANT | | | CLASSIFICATION OF THE APPLICATION (Int. Cl.) |
|---|---|---|---|
| Category | Citation of document with indication, where appropriate, of relevant passages. | Relevant to claim | |
| X | <u>US - A - 4 095 846 (AGINS)</u><br>* Column 1, line 24 - column 3, line 25; figure 2 * | 1,3-7<br>11,12 | B 60 Y 3/05<br>5/00<br>5/02 |
| X | <u>FR - A - 2 351 778 (DENOUEIX)</u><br>* Page 1, lines 1-29; figures 1-3* | 1,2,<br>4,5 | |
| A | <u>US - A - 3 214 220 (FOSTER)</u><br>* Column 1, line 57 - column 4, line 21; figures 1-8 * | 1,3,4<br>6,7,<br>11,12 | TECHNICAL FIELDS SEARCHED (Int. Cl.) |
| A | <u>US - A - 1 351 261 (MILLER)</u><br>* Page 1, line 10 - page 2, line 40; figures 1,3 * | 1,2,<br>4-7 | B 60 B 3/<br>5/<br>7/<br>19/ |
| A | <u>US - A - 1 406 945 (DUNLAP)</u><br>* Page 1, line 66 - page 2, line 60; figures 1-5 * | 1,2,4<br>7 | |
| A | <u>GB - A - 1 125 948 (HUGHES)</u><br>* Page 1, line 19 - page 2, line 65; figures 1-3 * | 1,3,<br>9,12 | CATEGORY OF CITED DOCUMENTS |
| A | <u>US - A - 1 373 889 (JOHNSTON)</u><br>* Page 1, lines 80-99; figure 2 * | 1,2,<br>4-6 | X: particularly relevant<br>A: technological background<br>O: non-written disclosure<br>P: intermediate document<br>T: theory or principle underlying the invention<br>E: conflicting application<br>D: document cited in the application<br>L: citation for other reasons |
| | | | &: member of the same patent family<br>corresponding document |

| | | | |
|---|---|---|---|
| | The present search report has been drawn up for all claims | | |
| Place of search | Date of completion of the search | Examiner | |
| The Hague | 22-05-1980 | AYITER | |

EPO Form 1503.1  06.78